# EUROPEAN PATENT SPECIFICATION

(11) **EP 2 397 443 B1**
(45) Date of publication and mention of the grant of the patent: **15.11.2017**
(21) Application number: 11460009.1
(22) Date of filing: 06.03.2011
(51) Int. Cl.: C01F 15/00

(54) **Method of dissolution of thorium (IV) oxide**
Verfahren zur Auflösung von Thorium(IV)dioxid
Procédé de dissolution d'oxyde de thorium (IV)

(30) Priority: 26.03.2010 PL 39084410
(43) Date of publication of application: 21.12.2011
(73) Proprietor: Instytut Chemii i Techniki Jadrowej, 03-195 Warszawa (PL)
(72) Inventor: Lyczko Krzysztof, 03-125 Warszawa (PL); Lyczko Monika, 03-125 Warszawa (PL); Herdzik Irena, 37-403 Pysznica, Woj. podkarpackie (PL); Zielinska Barbara, 02-495 Warszawa (PL)
(74) Representative: Brodowska, Iwona

(56) References cited:
- EP-A1- 0 049 827
- BE-A- 397 099
- DE-A1- 3 009 077
- US-A- 2 988 421
- MIRASHI N N ET AL: "Dissolution of sintered thorium dioxide in phosphoric acid using autoclave and microwave methods with detection by gamma spectrometry", MICROCHEMICAL JOURNAL, NEW YORK, NY, US, vol. 94, no. 1, 1 January 2010 (2010-01-01), pages 24-27, XP026784706, ISSN: 0026-265X, DOI: 10.1016/J.MICROC.2009.08.002 [retrieved on 2009-08-15]

## Description

The subject of the invention is a process of dissolution of thorium(IV) oxide in trifluoromethanesulfonic (triflic acid and the acid solution, which allows the use of thorium(IV) oxide as a material in nuclear power, as well as for the processing of ores containing thorium(IV) oxide.

In nuclear power engineering renewed growth of interest came up in uranium- thorium fuel cycle, in which as a result of irradiation with neutrons, thorium-232 is converted into fissile uranium-233. For reactors using thorium(IV) oxide as a fertile material, it is necessary to develop a method of its processing. Therefore the problem of dissolving ThO₂ becomes the issue of most importance not only for the nuclear energy, but also for the processing of ores containing thorium(IV) oxide. For reprocessing of nuclear fuel is also important the aspect of solubility of thorium(IV) oxide subjected to high temperatures (above 1000°C), which equals the temperature that fuel is treated in nuclear reactors. It is known that the compound sintered at high temperatures is much harder to undergo dissolution than the same compound not subjected to high temperatures.

It is well known that thorium(IV) oxide is chemically inert substance. In aqueous solution, it only dissolves in a mixture composed of concentrated nitric acid and a small amount of hydrofluoric acid. Addition of HF causes corrosion of components for the reprocessing of spent fuel. Therefore, the most common method of dissolving of ThO₂ is to treat it with the so-called THOREX solution, containing 13 M nitric acid, 0.02-0.05 M hydrofluoric acid and 0.1 M aluminium nitrate. In this system, HF becomes a catalyst of the reaction, and Al(NO₃)₃ protects against the corrosive action of hydrofluoric acid, preventing at the same time the precipitation of thorium(IV) fluoride (THF₄).

It is also known a method of obtaining thorium compounds easily soluble in aqueous solutions by sintering thorium(IV) oxide with ammonium sulfate at temperatures of 250, 365 or 450°C, which gives respectively (NH₄)₄Th(SO₄)₄, (NH₄)₂Th(SO₄)₃ and Th(SO₄)₂ (S. Chaudhury, M. Keskar, A. V. Patil, K. D. S. Mudher and V. Venugopal Radiochem. Acta 2006, 94, 357-361).

Th⁴⁺ ions exist only in aqueous solutions at low pH. It is well known, that micromolar amounts of thorium(IV) ions, start to hydrolyse at pH=4, while for more concentrated solutions of these ions the hydrolysis is considerable at pH=1. Therefore during the dissolution of ThO₂ and other thorium compounds in aqueous solution properly low pH value should be maintained.

There was also known a method for obtaining of thorium(IV) trifluormethanesulfonate by reaction of trifluoromethanesulfonic acid with precipitated obtained as a result of treating of thorium(IV) nitrate by sodium hydroxide (M. Walker, U.S. Patent 6,362,375, 2002) or as a result of direct reaction of thorium(IV) nitrate with triflic acid (M. Bouby, I. Billard and J. MacCordick J. Alloys Comp. 1998, 271-273, 206-210).

Surprisingly, in the course of our research project: "Analysis of the effects of using thorium in nuclear power reactor," POIG 01.03.01-00-076/08-00 dated 20 February 2009, supported by European Regional Development Fund, we found out that using the method presented in the invention, in a small volume of solution, we can dissolve a considerable amount of ThO₂, without necessity of adding to the solution other inconvenient compounds, such as hydrofluoric acid and aluminium nitrate.

Method of dissolution of thorium(IV) oxide, according to the invention is that the process of dissolution of thorium(IV) oxide is carried out in concentrated trifluoromethanesulfonic acid and/or its aqueous solution at a temperature above the boiling point of acid.

In the method presented in the invention, an aqueous solution of trifluoromethanesulfonic (triflic) acid with concentration in the range from 30 to 98%, at temperature from 160 to 200°C is used preferably.

In the method presented in the invention, an aqueous solution of trifluoromethanesulfonic (triflic) acid with concentration in the range from 65 to 85% at temperature from 170 to 180°C is used preferably.

Triflic acid is a very strong organic acid having a boiling point at 162°C. It turned out that in the method presented in the invention, adding a small amount of water to concentrated triflic acid significantly accelerates process of dissolution of thorium(IV) oxide (see Examples VII and VIII).

The method presented in the invention has many advantages, namely: it is achieved in a very simple system without necessity of adding to the solution other inconvenient compounds such as hydrofluoric acid and aluminium nitrate. Furthermore, in a small volume of solution a large amount of ThO₂ can be dissolved (see Example III). With appropriate concentration of acid dissolution process can be shortened to several or tens of minutes (see Examples I and II). Also the costs of implementation of the method presented in the invention are not large. Additionally, it appeared that in the method presented in the invention ThO₂ sintered at 1200°C also dissolves (see Example IV).

The method presented in the invention may be important in the processing of nuclear fuel based on thorium(IV) oxide and the processing of ores containing ThO₂. It may become a competitive method compared to currently used mixture of acids HNO₃ and HF. As a result of the method presented in the invention from ThO₂, an easily dissoluble in aqueous solution form of Th⁴⁺ ions, as a solution of trifluoromethanesulfonate (triflate) salt is obtained.

The invention is presented in the following examples.

### Example I.

To 0.100 g of powdered ThO₂ (99.9%, Matthey Reagent) was added 3 ml of 81.7% aqueous solution of trifluoromethanesulfonic (triflic) acid obtained by mixing 0.5 ml of water (twice distilled) with 2.5 ml of concentrated CF₃SO₃H (98%, Fluka). The mixture was heated on a heating mantle in a round-bottom flask with capacity of 25 ml, under reflux condenser at temperature higher than the boiling point of CF₃SO₃H. The air temperature above the heating mantle at the height of the bottom of a flask fluctuated in the range from 160 to 200°C. After about 10 minutes ThO₂ dissolved and gave clear solution containing the thorium(IV) trifluoromethanesulfonate.

### Example II.

In an identical system as in Example I 0.100 g of ThO₂ was heated in 3.0 ml of 65.3% triflic acid aqueous solution obtained by mixing 1.0 ml of water with 2.0 ml of concentrated 98% CF₃SO₃H. After about 20 minutes ThO₂ dissolved and gave a clear solution.

### Example III.

In an identical system as in Example I 0.600 g of ThO₂ was heated in 3.0 ml of 65.3% triflic acid aqueous solution. After about 60 minutes ThO₂ dissolved and gave a clear solution.

### Example IV.

In an identical system as in Example I 0.100 g of ThO₂ (sintered at 1200°C for 30 h) was heated in 3.0 ml of 65.3% triflic acid aqueous solution. After about 35 minutes ThO₂ dissolved and gave a clear solution.

### Example V.

In an identical system as in Example I 0.100 g of ThO₂ was heated in 3.0 ml of 49% triflic acid aqueous solution obtained by mixing 1.5 ml of water with 1.5 ml of concentrated 98% CF₃SO₃H. After about 130 minutes ThO₂ dissolved and gave a clear solution.

### Example VI.

In an identical system as in Example I 0.100 g of ThO₂ was heated in 3.0 ml of 32.7% triflic acid aqueous solution obtained by mixing 2.0 ml of water with 1.0 ml of concentrated 98% CF₃SO₃H. After about 200 minutes ThO₂ dissolved and gave a clear solution.

### Example VII.

In an identical system as in Example I 0.100 g of ThO₂ was heated in 3.0 ml of concentrated 98% triflic acid. After 180 minutes ThO₂ did not dissolve. Then to this mixture 0.25 ml of water was added and a heating was continued. After about 10 minutes after adding water ThO₂ dissolved.

### Example VIII.

In an identical system as in Example I 0.100 g of ThO₂ was heated in 3.0 ml of concentrated 98% triflic acid. After about 300 minutes, a considerable amount of ThO₂ dissolved. Then to this mixture 0.2 ml of water was added, and a heating was continued. After about 10 minutes after adding water a clear solution was obtained.

## Claims

1. Method of dissolution of thorium(IV) oxide, **characterized in that** the process of dissolution of thorium(IV) oxide is carried out in concentrated trifluoromethanesulfonic acid and/or aqueous solution of that acid at temperature above the boiling point of acid.

2. The method according to claim 1, **characterized in** using an aqueous solution of trifluoromethanesulfonic acid with concentration in the range from 30% to 98%, and temperatures from 160 to 200°C.

3. The method according to claim 1, **characterized in** using an aqueous solution of trifluoromethanesulfonic acid with concentration in the range from 65% to 85% at temperatures from 170 to 180°C.

## Patentansprüche

1. Verfahren zur Auflösung von Thorium(IV) oxid, **dadurch gekennzeichnet, dass** der Prozess der Auflösung der Thorium(IV) oxid aus in konzentrierter Trifluormethansulfonsäure und / oder der wässrigen Lösung dieser Säure bei einer Temperatur über dem Siedepunkt der Säure ausgeführt.

2. Verfahren nach Anspruch 1, unter Verwendung einer wässrigen Lösung von Trifluormethansulfonsäure mit der Konzentration im Bereich von 30% bis 98% ist, und Temperaturen von 160 bis 200°C.

3. Verfahren nach Anspruch 1, unter Verwendung einer wässrigen Lösung von Trifluormethansulfonsäure mit der Konzentration im Bereich bis 85% gekennzeichnet, daß von 65% bei Temperaturen von 170 bis 180°C.

## Revendications

1. Procédé de dissolution de l'oxyde de thorium(IV), **caractérisé en ce que** le processus de dissolution de l'oxyde de thorium(IV) est réalisée dans de l'acide trifluorométhanesulfonique concentré et / ou solution aqueuse de cet acide à une température supérieure au point d'ébullition de l'acide.

2. Procédé selon la revendication 1, caractérisé en utilisant une solution aqueuse d'acide trifluorométhanesulfonique à une concentration dans la gamme de 30% à 98%, et à des températures de 160 à 200°C.

3. Procédé selon la revendication 1, caractérisé en utilisant une solution aqueuse d'acide trifluorométhanesulfonique à une concentration dans la gamme de 65% à 85% à des températures de 170 à 180°C.
